# EUROPEAN PATENT SPECIFICATION

(11) **EP 2 275 391 B1**
(45) Date of publication and mention of the grant of the patent: **07.03.2012**
(21) Application number: 09165680.1
(22) Date of filing: 16.07.2009
(51) Int. Cl.: C04B 28/04, C04B 28/18, C04B 41/52

(54) **Air-purifying fiber reinforced cementitious building material.**
Luftreinigendes, faserverstärktes Zementbaumaterial
Matériau de construction cimentaire renforcé par fibres pour la purification de l'air

(43) Date of publication of application: 19.01.2011
(73) Proprietor: REDCO S.A., 1880 Kapelle-op-den-Bos. (BE)
(72) Inventor: Saenen, Wim, 1880, Kapelle-op-den-Bos (BE); Deblauwe, Veerle, 1880, Kapelle-op-den-Bos (BE)
(74) Representative: Vandeberg, Marie-Paule L.G.

(56) References cited:
- EP-A1- 1 992 597
- EP-A1- 2 036 871

## Description

### FIELD OF THE INVENTION

The present invention relates to a fiber reinforced cementitious building material with air-purification activity and to the use of said fiber reinforced cementitious building material for exterior wall cladding and roofing applications. The present invention also provides a process for the manufacturing of said fiber reinforced cementitious building material. Specifically, the invention is in the field of fiber reinforced cementitious building materials provided with a photocatalytic cementitious layer capable of oxidizing atmospheric pollutants to harmless soluble salts in the presence of sunlight and water. The invention concerns more particularly a fiber reinforced cementitious building material with a photocatalytic action whose effectiveness is constant and long lasting.

### PRIOR ART

Photocatalysts are semiconductors whose electrons can be transferred from the valence to the conduction band by photons in the UV-A range. The thus created electron holes are responsible for the formation of hydroxyl radicals in the presence of water, which act as a strong oxidant and can hence degrade compounds in further reactions. In particular, they bond to nitrogen oxides (NOx) which are converted to nitrates. In case the photocatalyst is incorporated in an alkaline cementitious matrix, these nitrate ions bind with positive ions, e.g. of calcium and sodium present in the cementitious matrix, and form salts such as calcium nitrate and sodium nitrate which are flushed from the surface by rain. A preferred semiconductor for the activation of the photocatalytic process is titanium dioxide in its anatase crystal form.

Cement-based building materials provided with a photocatalytic active surface have already been described.

JP2000-017784 describes an atmosphere purifying roof material characterized by a surface layer with a thickness of at least 0,5 mm and comprising titanium dioxide. EP-A-187871 concerns a cementitious surface coating with photocatalytic activity comprising fine photocatalytic particles with a specific surface greater than 200 m²/g and large particles having a specific surface below 100 m²/g, and in which the fine photocatalytic particles are prevalently disposed in the outer surface layer, as they are dragged along by water rising to the surface. Upon evaporation of the water, the dissolved ingredients originating from the cementitious matrix form deposits on the surface, a phenomenon which is known as efflorescence. In the case of Portland cement-based materials, particularly calcium and hydroxide ions are dissolved into the water, forming almost insoluble calcium carbonate on the surface by reaction with atmospheric carbon dioxide, which prevents the contact of the photocatalyst with light.

However, EP-A-187871 solves the problem of formation of an efflorescence layer only partially, and there is still calcium carbonate present on the surface, which reduces the efficiency of the photocatalytic layer.

JP2008-007368 addresses the problem of efflorescence with photocatalytic cementitious materials by using alumina cement. Unfortunately, alumina cement is not only an expensive raw material, but its setting is too fast to be used in a Hatschek process, which is the most common method for the manufacturing of fiber reinforced cementitious building materials. JP2006-248793 and JP2000-233134 tackle the problem of reduced photodecomposition performance with time by adding an efflorescence preventing agent such as a water- repellent agent, to the cement composition.

However, we observed that avoiding efflorescence does not guarantee a durable photocatalytic performance in the case of fiber reinforced cementitious articles. In fact, the nitrates which are the major photo-oxidation reaction products, penetrate at least partly into the porous fiber reinforced cement matrix, especially in periods of absence of rainfall. These nitrates promote undesirable microbial growth such as algae, particularly under conditions of high relative humidity, and especially after carbonation of the cementitious matrix, when its reduced alkalinity no longer avoids the microbial growth. The micro-organisms shield the photocatalytic layer from light, and hence air purification efficiency decreases after prolonged atmospheric exposure.

W02007/106242 concerns a photocatalytic substrate with a biocidal polymeric coating which provides long-term resistance to staining from bio-organisms or from airborne contaminants. However, such photocatalytic substrates do not have an air depollution function. In case the biocidal polymeric coating does not comprise a photocatalytic antimicrobial agent, there is no direct contact of air pollutants with the photocatalytic particles in the adjacent structural layer. In case the biocidal polymeric coating comprises a photocatalytic antimicrobial material, the polymeric coating degrades upon prolonged exposure to UV light, and an underlying efflorescence layer will shield the photocatalytic material from light, resulting in a lower air purification performance. W02007/106242 does not disclose the necessary simultaneous presence of photocatalyst, efflorescence preventing agent and biocide to obtain a high and durable air depollution efficiency in the top layer of cementitious substrates.

EP-A-1162182 discloses a cement-based joint body comprising a hydraulic material, a particulate aggregate having a particle diameter of not more than 10 µm, and an antimicrobial/fungicidal agent and/or a photocatalytic metal oxide and characterized by a water absorption of not more than 10%. However, EP-A-1162182 does not provide an air-purifying cementitious article. Moreover, the biocide and the photocatalyst are added to the matrix. This is not feasible for fiber reinforced cementitious building materials manufactured according to the Hatschek process, as the biocide and the photocatalyst contaminate the process water which is normally recycled. Also, adding the biocide throughout the matrix is not economical, especially in case of relative thick fiber reinforced cementitious articles used for covering substantial surfaces such as façades and roofs.

EP-A-2036871 describes a process for the manufacturing of a coated fibre-cement product comprising the application of a water-repellent on the fibre-reinforced cement product before providing the fibre-cement product with a translucent organic coating; the latter comprises possibly a biocide and pigments such as TiO₂. However, the use of TiO₂ in the polymeric translucent top coating of EP-A-2036871 is limited to its rutile crystalline form which has a very low photocatalytic activity compared to its anatase crystalline form. The incorporation of anatase form of TiO₂ in an organic coating would lead to its fast degradation due to the formation of radicals during the photocatalytic reaction of anatase. Consequently, EP-A-2036871 does not describe a fiber reinforced cementitious photocatalytically active (and hence air-purifying) building material.

### BRIEF DESCRIPTION OF THE DRAWING

The invention will be explained in detail below, referring to the accompanying drawing.

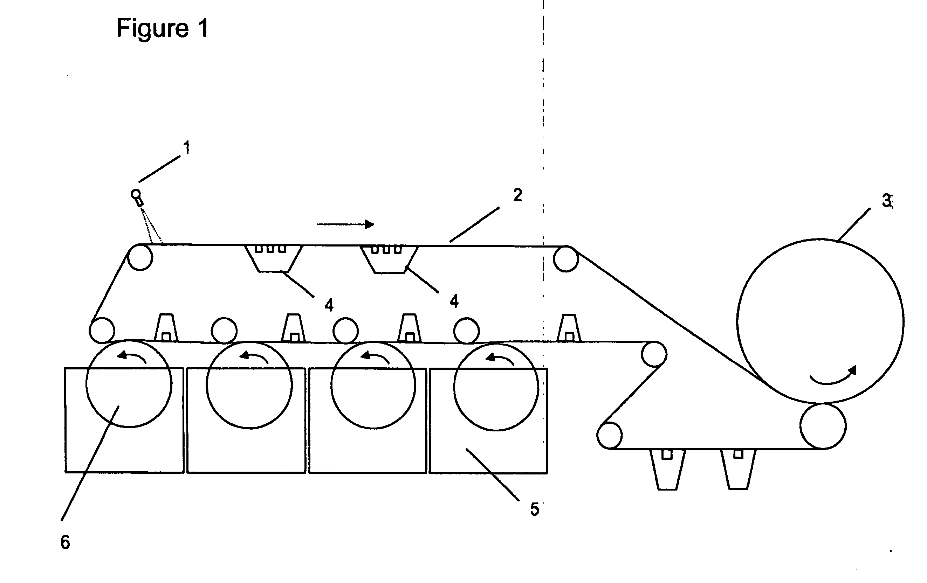

Figure 1 is a schematic view of a Hatschek process according to the invention, wherein :
1 spray nozzles
2 conveyor felt
3 forming drum
4 vacuum boxes
5 vat
6 sieve

### SUMMARY OF THE INVENTION

The present invention overcomes the abovementioned problems by providing at least a fiber reinforced cementitious air purifying building material manufactured according to a process comprising a production step on a Hatschek line and based on a calcium silicate cement composition, and comprising a water-repellent photocatalytic active cementitious top layer characterized in that said top layer further comprises a biocidal agent. It solves more particularly the problem of microbial growth by incorporating a biocidal agent into the photocatalytic cementitious top layer.

Other aspects of the present invention are a process for the manufacturing of said fiber reinforced cementitious air-purifying building material and the use of said fiber reinforced cementitious air-purifying building material in exterior applications, and more specifically in façade cladding and roofing applications such as slates.

Fiber reinforced cementitious articles of the present invention are manufactured according to a process comprising a production step on a Hatschek line, which is a modified sieve cylinder paper making machine and which consists in forming a sheet comparable to a paper, by filtration using a fluid aqueous suspension obtained by mixing essentially cement, fibers, water, processing aids and additives. Rotating sieves housed within vats are suspended partially within this slurry. These sieves consist of a drum covered with a filter cloth; since the drum rotates in the vat, the hydrostatic pressure forces some of the water to pass through the filter cloth, whereas the solids, that is to say notably the fibres, the cement particles and other additives, build up on the screen of the drum as a thin layer whose thickness increases with the rotation of the drum. The fibers hold to the sieve, forming an additional screen, the mesh cells of which have a size suitable for retaining the particles, even fine particles, of cement or of other binder or additive, together with an important amount of water which contributes to the cohesion of the layer being formed on the screen. The retention on the sieve can be further enhanced by the addition of flocculants. The layer is transferred from the sieve, usually by means of a felt belt and further dewatered by suction through the belt, to a forming roll, on which the material is built up until the desired thickness has been reached. The green sheet is optionally post-compressed to density and subsequently left to harden under atmospheric conditions (air-curing) or under pressurized steam at a temperature above 100°C (autoclaving).

The fiber reinforced cementitious building material according to the present invention is preferably air-cured. Preferred fiber reinforced cementitious building material according to the present invention have been pressed.

The hydraulic-setting composition used for the manufacture of the fiber reinforced cementitious material according to the present invention comprises a calcium silicate based cement as hydraulic binder. Suitable calcium silicate based cements are Portland cement, slag cement, and others. The highly alkaline character of these hydraulic binders is well-known. Portland cement is preferred.

The hydraulic-setting composition used for the manufacture of the fiber reinforced cementitious material according to the present invention possibly comprises reinforcing organic and/or inorganic fibers. Examples of reinforcing inorganic fibers are alkali-resistant glass fibers, ceramic fibers, and the like, and their blends. Examples of organic reinforcing fibers are fibers of cellulose, polyolefins such as polyethylene or polypropylene, polyamide, polyacrylonitrile, polyester, aramid, polyvinylalcohol, carbon, and the like, and their blends. The content of reinforcing fibers is preferably equal to or less than 15% by weight with respect to the initial total weight in the dry state of the hydraulic-setting composition.

The hydraulic-setting composition used for the manufacture of the fiber reinforced cementitious building material according to the present invention can further comprise processing aids, such as processing fibers, flocculants, anti-foam agents. Appropriate processing fibers are cellulose fibers, polyolefin fibrils, and others, and their blends. The amount of processing fibers is preferably equal to or less than 10% by weight with respect to the initial total weight in the dry state of the hydraulic-setting composition.

The hydraulic-setting composition used for the manufacture of the fiber reinforced cementitious building material according to the present invention may further comprise fillers and/or additives, such as fly ash, amorphous silica, ground quartz, ground rock, clays, blast-furnace slags, carbonates, pozzolanic earth, etc. The total quantity of fillers and/or additives is preferably less than 50% by weight with respect to the initial total weight in the dry state of the hydraulic-setting composition.

The fiber reinforced cementitious building material according to the present invention comprises a water repellent photocatalytic active cementitious top layer. The latter is preferably applied as cementitious slurry on top of the first fiber cement layer before dewatering on the felt of the Hatschek machine, either by spraying or by rotating brushes. The water/cement ratio of this cementitious slurry is preferably about 1. The thickness of the photocatalytic top layer is preferably at least 100 µm, more preferably at least 150 µm. The photocatalytic active top layer comprises a photocatalyst. Titanium dioxide is preferred. The anatase form is particularly preferred. Aqueous dispersions of anatase are very suitable. Good results were obtained by using aqueous dispersions of anatase with a solids content in the range between 50 and 80 wt %. Appropriate photocatalytic performance is obtained with a photocatalyst concentration of at least 4 wt % with respect to the total dry weight of the composition of the photocatalytic active top layer. Photocatalyst concentrations of at least 6 wt % with respect to the total dry weight of the composition of the photocatalytic active top layer are particularly preferred. Suitable photocatalysts have a specific surface in the range of from 5 to 30 m²/g. Photocatalysts with a specific surface in the range of from 8 to 15 m²/g are particularly preferred. Photocatalysts with a specific surface higher than 30 m²/g do not give a satisfactory level of photocatalytic activity, because a considerable amount of the photocatalyst is lost during filtration on the felt. Air-purification efficiency is low with photocatalyst characterized by a specific surface below 5 m²/g.

The photocatalytic active top layer is a cementitious layer, but contrary to the base layer which is formed on a Hatschek machine, it does not comprise fibers; consequently its density is higher and the probability to have photocatalytic particles on the surface increases. The photocatalytic active top layer comprises preferably the same calcium silicate based cement as the base layer.

The photocatalytic active cementitious top layer possibly comprises pigments, such as chromium oxides, carbon black, iron oxides.

The photocatalytic active top layer comprises a water-repellent agent. The fiber reinforced cement materials according to the present invention are manufactured using a calcium silicate cement, preferably Portland cement, as hydraulic binder. This raw material has the disadvantage of leading to efflorescence problems, as outlined before. However, non-efflorescing cements, such as alumina cements are too expensive to be used for commodity products and have to be used not only in the photocatalytic top layer of the fiber reinforced cementitious article, but also in the base layer in order to avoid efflorescence; moreover, as mentioned above, alumina cement is not suitable to be used on a Hatschek machine due to its rapid setting. The use of a water-repellent agent in the photocatalytic active top layer avoids the appearance of an efflorescence surface layer which shields the photocatalyst from contact with light. The water- repellent agent is preferably added to the cementitious slurry used for the photocatalytic top layer. Suitable water-repellents which can be added to to the cementitious slurry used for the photocatalytic top layer have to be alkali-resistant and do not affect the cement hardening. Examples of appropriate water-repellents are silanes, silsesquioxanes, siloxanes and silicones, and their blends. Preference is given to aqueous emulsions of the latter. Good results were obtained with an amount of water-repellent agent in the photocatalytic active top layer are in the range of from 0,01 to 3 wt% with respect to the hydraulic binder. A concentration of water-repellent agent below 0,01 wt% does not give a long-lasting air-purification efficiency; a concentration of water-repellent above 3 wt% does not give an enhanced atmosphere-cleaning performance and hence is not economical. Concentrations of water-repellent agent in the photocatalytic active top layer in the range of from 0,08 to 2 wt% with respect to the hydraulic binder are particularly preferred.

According to another embodiment of the present invention, the water-repellent agent can be applied on the photocatalytic active cementitious top layer of the fiber reinforced cementitious building material instead of adding it to the cementitious slurry used for the photocatalytic top layer. In this case, the water-repellent agent is preferably applied by roller coating or by spraying once the fiber reinforced cementitious building material has left the Hatschek line and has been cured at a temperature preferably in the range of from 35 to 75°C during a period which is preferably in the range of from 5 to 10 hours. According to this particular way of execution of the invention, the water-repellent agent is preferably solvent-based. Suitable water-repellent agents which are used for application on the photocatalytic active top layer of the fiber reinforced cementitious building material are silanes.

The photocatalytic active top layer also comprises a biocidal agent which avoids the formation of algae, lichen and moss. Although photocatalytic coatings are often applied on surfaces for their self-cleaning and antimicrobial effect resulting from the photo-oxidation of organic material, they do not impart these properties when incorporated into non-smooth and porous fiber reinforced cementitious substrates. As mentioned above, the nitrates resulting from the photocatalytic reaction with NOx air pollutants, penetrate into the porous cementitious substrate, especially under conditions of high relative humidity in the absence of rain, and form a nutrient layer for micro-organisms such as algae, which cover the photocatalytic top layer to a certain extent and reduce its air depolluting efficiency. Suitable biocides are heat, alkali and UV stable without adversely affecting the performance of the fiber reinforced cementitious article and are released slowly. Useful biocides include organic and inorganic biocides. Examples of organic biocides are oxines or pyrithiones. Inorganic biocides are preferred for exterior applications, especially in the presence of a photocatalyst. Preferred inorganic biocides have a low water solubility and include transition metals such as copper and silver and inorganic transition metal oxides or salts, for example cuprous and cupric oxide, cupric sulfate, silver chloride and zinc oxide. An amount of biocidal agent in the photocatalytic active top layer in the range of 0,1 to 20 wt% with respect to the total dry weight of the composition of the photocatalytic active cementitious top layer is preferred. A concentration of biocidal agent below 0,1 wt% has not a satisfactory antimicrobial action; a concentration of biocidal agent above 20 wt% leads to undesired adhesion on the forming drum. An amount of biocidal agent in the photocatalytic active top layer in the range of 0,2 to 15 wt% with respect to the total dry weight of the composition of the photocatalytic active cementitious top layer is particularly preferred. According to a preferred mode of execution, the biocidal agent is added as an aqueous dispersion to the cementitious slurry forming the photocatalytic top layer. In another embodiment of the present invention, the biocidal agent can be applied applied on the photocatalytic active cementitious top layer of the fiber reinforced cementitious building material once the fiber reinforced cementitious building material has left the Hatschek line and has been cured, for example by roller coating or by spraying.

The invention also provides a first process for manufacturing fiber reinforced cementitious building material with photocatalytic activity comprising the following steps :
a) formation of a first layer of the green base sheet by a Hatschek process,
b) formation of a top layer by application of an aqueous cementitious slurry comprising a calcium silicate based cement, a photocatalyst and at least one product selected from a biocidal agent and a water-repellent agent, on said first layer of the green sheet obtained in step (a) as the latter moves on the conveyor felt, and over a length corresponding to the circumference of the forming drum,
c) dewatering said first layer of the green base sheet obtained in step (a) provided with the photocatalytic active top layer applied on it in step (b),
d) winding the dewatered first layer of the green base sheet obtained in step (a) provided with the photocatalytic active top layer applied on it in step (b) on the forming drum,
e) forming additional layers of the base sheet until the desired thickness is obtained on the forming drum,
f) curing the product obtained in step e).

Step (a) is the formation of a first layer of the green base sheet. This first layer comprises besides a calcium silicate based cement, reinforcing fibers such as polyvinylalcohol and/or polypropylene fibers, processing fibers such as cellulose fibers and additives such as fly ash, amorphous silica, clays, blast-furnace slags, carbonates, etc.

Step-(b)-is the application of a photocatalytic active-top layer as an aqueous cementitious slurry comprising a calcium silicate based cement, a photocatalyst and at least one product selected from a biocidal agent and a water-repellent agent, on said first layer of the green sheet obtained in step (a). The photocatalytic active cementitious slurry does not comprise fibers and is applied using preferably spray nozzles or rotating brushes in a discontinuous way, i.e. only over a length corresponding to the circumference of the forming drum. This forming drum is an inversion roller, and hence the photocatalytic layer which was in contact with its surface during formation of the fiber reinforced cement building material is located on top when the latter leaves the Hatschek line.

The layers obtained in step (a) and (b) are dewatered together on the felt of the Hatschek line; usually, the dewatering is carried out by using several vacuum boxes located on the bottom side of the felt of the Hatschek line. They are then wound together on the forming drum in step (d), whereby the bottom of the base layer which was in direct contact with the felt is the outer face and the photocatalytic top layer contacts the surface of the forming drum. Subsequent layers of the base sheet are formed in step (e) until the desired thickness is obtained. The uncured fiber reinforced cement sheets are then preferably pre-cut followed by stacking. Next they are preferably pressed between metal templates. During this pressing at pressures which are usually in the range of from 20 to 30 MPa, the density and consequently the strength of the fiber reinforced cement sheet increase. Interlaminar bond strength between the layers and freeze-thaw resistance due to lower water absorption, are also improved by the pressing step. A low water absorption is required for exterior applications, such as façade cladding and roofing applications.

Cement hardening is accelerated in the curing step f) which is preferably performed in an oven at a temperature in the range of from 50°C to 90°C during 4 to 10 hours. The density of the fiber reinforced building material according to the present invention obtained after step (f) is preferably at least 1,6 g/cm³, more preferably at least 1,7 g/cm³.

Finally, the fiber reinforced cement sheets are cut to the desired dimensions. Preferably, rotating blades are used for the cutting.

According to a second process of the present invention, the fiber reinforced cementitious building material is manufactured according to the process as described above, but without the addition of the water-repellent agent and/or the biocidal agent to the aqueous cementitious slurry in step b). In this process, the water-repellent agent and/or the biocidal agent are/is applied on the photocatalytic active top layer of the fiber reinforced cementitious building material in an additional step. According to this second process of the present invention, the biocidal agent can be added in step b) while the water-repellent agent is applied in step f), or the water-repellent agent can be added in step b) while the biocidal agent is applied in step f) or the biocidal agent and the water-repellent agent can both be applied in step f).

### DETAILED DESCRIPTION

The invention is described hereafter in a detailed way using particular examples of embodiment.

### EXAMPLES

### Comparative example 1

The composition of the first series of reference slates is based on the composition of Alterna• slates commercialized by Eternit, except that the cementitious top layer further comprises 7 wt% of -Kronos• 1001 (TiO₂ photocatalyst) and 1 wt % of Dow Corning IE6683 (water-repellent) and that no polymeric coating was applied.

### Example 1

Test slates have been manufactured according to the first process provided by the invention. These slates are similar to the first series of reference slates described in comparative example 1 except that the cementitious top layer of about 200 µm further comprises 4 wt% of Zinc Oxide Neige C (biocidal agent commercialised by Umicore) with respect to the total dry weight of the composition of photocatalytic active cementitious top layer.

### Comparative example 2

The compositon of the second series of reference slates is similar to the composition of the first series of reference slates, except that the cementitious top layer does not comprise a water-repellent agent., but that 25,5 g/m² of Z-6403 Silane (water-repellent commercialized by Dow Corning) were applied by roller coating on the slates which were previously air-cured at 40°C during 8 hours after production .

### Example 2

Test slates have been manufactured according to the second process provided by the invention. These slates are similar to second series of reference slates described in comparative example 2 except that the cementitious top layer of about 200 µm further comprises 4 wt% of Zinc Oxide Neige C (biocidal agent commercialised by Umicore) with respect to the total dry weight of the composition of photocatalytic active cementitious top layer.

Ten slates of each of the four series have been submitted to exterior exposure during 25 5 months (starting mid-October) on Eternit's production site in Kapelle-op-den-Bos in Belgium.

The photocatalytic activity is measured according to ISO 22197-1, but using a cycle of an irradiation time of 20 minutes, followed by a dark period of 10 minutes.

The average-results of the NO reduction 1 week after production (reference level of 100%) and after 25 months exterior exposure as well as the visual observations of the microbial growth after 25 months exterior exposure are listed in table 1 below.

**Table 1**

| | Example 1 | Example 2 | Comparative example 1 | Comparative example 2 |
|---|---|---|---|---|
| NO reduction after 1 week (%) | 100 | 100 | 100 | 100 |
| NO reduction after 25 months (%) | 52 | 56 | 9 | 11 |
| Visual inspection after 25 months | OK | OK | Green deposit | Green deposit |

The results in table 1 show that the photocatalytic slates according to the present invention maintain the initial photocatalytic activity even after 25 months of exterior exposure, while this is not the case for the slates of the comparative example not comprising a biocidal agent, and that this durable photocatalytic activity or air depolluting efficiency can be correlated with the absence of microbial growth.

## Claims

1. Fiber reinforced cementitious air-purifying building material manufactured according to a process comprising a production step on a Hatschek line and based on a calcium silicate cement composition, and comprising a water-repellent photocatalytic active cementitious top layer **characterized in that** said top layer further comprises a biocidal agent.

2. Fiber reinforced cementitious building material according to claim 1 wherein the photocatalytic active cementitious top layer has been applied by spraying or by roller coating.

3. Fiber reinforced cementitious building material according to claim 1 or claim 2 wherein the photocatalytic active cementitious top layer has a thickness of at least 100 µm.

4. Fiber reinforced cementitious building material according to any of the preceding claims wherein the fiber reinforced cement building material is an air-cured product.

5. Fiber reinforced cementitious building material according to any of the preceding claims wherein the fiber reinforced cement building material is a pressed product.

6. Fiber reinforced cementitious building material according to any of the preceding claims wherein the photocatalytic active cementitious top layer comprises titanium dioxide.

7. Fiber reinforced cementitious building material according to claim 5 wherein the titanium dioxide is in its anatase form.

8. Fiber reinforced cementitious building material according to any of the preceding claims wherein the photocatalyst concentration is at least 4 wt% with respect to the total dry weight of the composition of the photocatalytic top layer.

9. Fiber reinforced cementitious building material according to any of the preceding claims wherein the photocatalytic active cementitious top layer comprises a photocatalyst **characterized by** a specific surface in the range of from 5 to 30 m²/g.

10. Fiber reinforced cementitious building material according to any of the preceding claims wherein the photocatalytic active cementitious top layer comprises an inorganic biocidal agent.

11. Fiber reinforced cementitious building material according to any of the preceding claims wherein the photocatalytic active cementitious top layer comprises a biocidal agent in the range of from 0,1 to 20 wt% with respect to the total dry weight of the composition of the photocatalytic active cementitious top layer.

12. Process for the production of a fiber reinforced cementitious air-purifying building material manufactured according to a process comprising a production step on a Hatschek line and based on a calcium silicate cement composition, and comprising a water-repellent photocatalytic active cementitious top layer **characterized in that** said top layer further comprises a biocidal agent according to any of the preceding claims, comprising the following steps :
a) formation of a first layer of the green base sheet,
b) formation of a top layer by application of an aqueous cementitious slurry comprising a calcium silicate based cement, a photocatalyst and at least one product selected from a biocidal agent and a water-repellent agent, on said first layer of the green sheet obtained in step (a) as the latter moves on the conveyor felt, and over a length corresponding to the circumference of the forming drum,
c) dewatering said first layer of the green base sheet obtained in step (a) provided with the photocatalytic active top layer applied on it in step (b),
d) winding the dewatered first layer of the green base sheet obtained in step (a) provided with the photocatalytic active top layer applied on it in step (b) on the forming drum,
e) forming additional layers of the base sheet until the desired thickness is obtained on the forming drum,
f) curing the product obtained in step e).

13. Process for the production of a fiber reinforced cementitious air-purifying building material manufactured according to the process of claim 12, wherein at least one product selected from a water repellent or a biocidal agent is applied after the cure of the photocatalytic active cementitious top layer.

14. Use of a fiber reinforced cementitious building material according to any of the preceding claims for wall cladding and roofing applications.

15. Use of a fiber reinforced cementitious building material according to claim 13 wherein the fiber reinforced cementitious building material is a slate.

## Patentansprüche

1. Faserverstärktes, luftreinigendes Zementbaumaterial, hergestellt gemäß einem Verfahren, umfassend einen Produktionsschritt auf einer Hatschek-Linie und basierend auf einer Calciumsilikat-2ementzusammensetzung und umfassend eine wasserabweisende photokatalytisch aktive Zement-Deckschicht, **dadurch gekennzeichnet, dass** die Deckschicht weiter ein Pestizid umfasst.

2. Faserverstärktes Zementbaumaterial nach Anspruch 1, wobei die photokatalytisch aktive Zement-Deckschicht durch Sprühen oder durch Walzbeschichtung aufgebracht wurde.

3. Faserverstärktes Zementbaumaterial nach Anspruch 1 oder Anspruch 2, wobei die photokatalytisch aktive Zement-Deckschicht eine Dicke von mindestens 100 µm aufweist.

4. Faserverstärktes Zementbaumaterial nach einem der vorhergehenden Ansprüche, wobei das faserverstärkte Zementbaumaterial ein luftgehärtetes Produkt ist.

5. Faserverstärktes Zementbaumaterial nach einem der vorhergehenden Ansprüche, wobei das faserverstärkte Zementbaumaterial ein gepresstes Produkt ist.

6. Faserverstärktes Zementbaumaterial nach einem der vorhergehenden Ansprüche, wobei die photokatalytisch aktive Zement-Deckschicht Titaniumdioxid umfasst.

7. Faserverstärktes Zementbaumaterial nach Anspruch 5, wobei das Titaniumdioxid in seiner Anataseform vorliegt.

8. Faserverstärktes Zementbaumaterial nach einem der vorhergehenden Ansprüche, wobei die Photokatalysator-Konzentration mindestens 4 Gew% bezüglich des gesamten Trockengewichts der Zusammensetzung der photokatalytischen Deckschicht aufweist.

9. Faserverstärktes Zementbaumaterial nach einem der vorhergehenden Ansprüche, wobei die photokatalytisch aktive Zement-Deckschicht einen Photokatalysator umfasst, **gekennzeichnet durch** eine spezifische Oberfläche im Bereich von 5 bis 30 m²/g.

10. Faserverstärktes Zementbaumaterial nach einem der vorhergehenden Ansprüche, wobei die photokatalytisch aktive Zement-Deckschicht ein anorganisches Pestizid umfasst.

11. Faserverstärktes Zementbaumaterial nach einem der vorhergehenden Ansprüche, wobei die photokatalytisch aktive Zement-Deckschicht ein Pestizid im Bereich von 0,1 bis 20 Gew% bezüglich des gesamten Trockengewichts der Zusammensetzung der photokatalytisch aktiven Zement-Deckschicht aufweist.

12. Verfahren zur Herstellung eines faserverstärkten, luftreinigenden Zementbaumaterials, hergestellt gemäß einem Verfahren, umfassend einen Produktionsschritt auf einer Hatschek-Linie und basierend auf einer Calciumsilikat-Zementzusammensetzung und umfassend eine wasserabweisende photokatalytisch aktive Zement-Deckschicht, **dadurch gekennzeichnet, dass** die Deckschicht weiter ein Pestizid nach einem der vorhergehenden Ansprüche umfasst, umfassend die folgenden Schritte:
a) Bilden einer ersten Schicht der grünen Grundfolie,
b) Bilden einer Deckschicht durch Auftragen eines wässrigen Zementschlamms, umfassend einen Zement auf Calciumsilikatbasis, einen Photokatalysator und mindestens ein Produkt, ausgewählt aus einem Pestizid und einem wasserabweisenden Mittel, auf die erste Schicht der grünen Folie, erhalten in Schritt (a), wenn sich Letztere auf dem Förderband bewegt, und auf einer Länge, die dem Umfang der Bildungstrommel entspricht,
c) Entwässern der ersten Schicht der grünen Grundfolie, erhalten in Schritt (a), ausgestattet mit der photokatalytisch aktiven Deckschicht, die in Schritt (b) auf sie aufgebracht wird,
d) Wickeln der entwässerten ersten Schicht der grünen Grundfolie, erhalten in Schritt (a), ausgestattet mit der photokatalytisch aktiven Deckschicht, die in Schritt (b) auf sie aufgebracht wird, auf die Bildungstrommel,
e) Bilden von zusätzlichen Schichten der Grundfolie, bis die gewünschte Dicke auf der Bildungstrommel erhalten wird,
f) Aushärten des Produkts, das in Schritt e) erhalten wird,

13. Verfahren zur Herstellung eines faserverstärkten, luftreinigenden Zementbaumaterials, hergestellt gemäß dem Verfahren nach Anspruch 12, wobei mindestens ein Produkt, ausgewählt aus einem wasserabweisenden Mittel oder einem Pestizid, nach dem Aushärten der photokatalytisch aktiven Zement-Deckschicht aufgetragen wird.

14. Verwendung eines faserverstärkten Zementbaumaterials nach einem der vorhergehenden Ansprüche für Mauerverkleidungs- und Abdeckungsanwendungen:

15. Verwendung eines faserverstärkten Zementbaumaterials nach Anspruch 13, wobei das faserverstärkte Zementbaumaterial ein Schiefer ist.

## Revendications

1. Matériau de construction cimentaire renforcé par fibres pour la purification de l'air fabriqué selon un procédé comprenant une étape de production sur une chaîne de Hatschek et basé sur une composition de ciment silico-calcaire, et comprenant une couche supérieure cimentaire active photocatalytique hydrofuge, **caractérisé en ce que** ladite couche supérieure comprend en outre un agent biocide.

2. Matériau de construction cimentaire renforcé par fibres selon la revendication 1 dans lequel la couche supérieure cimentaire active photocatalytique a été appliquée par pulvérisation ou par application au rouleau.

3. Matériau de construction cimentaire renforcé par fibres selon la revendication 1 ou la revendication 2, dans lequel la couche supérieure cimentaire active photocatalytique a une épaisseur d'au moins 100 µm.

4. Matériau de construction cimentaire renforcé par fibres selon l'une quelconque des revendications précédentes, dans lequel le matériau de construction cimentaire renforcé par fibres est un produit durci à l'air.

5. Matériau de construction cimentaire renforcé par fibres selon l'une quelconque des revendications précédentes, dans lequel le matériau de construction cimentaire renforcé par fibres est un produit pressé.

6. Matériau de construction cimentaire renforcé par fibres selon l'une quelconque des revendications précédentes, dans lequel la couche supérieure cimentaire active photocatalytique comprend du dioxyde de titane.

7. Matériau de construction cimentaire renforcé par fibres selon la revendication 5, dans lequel le dioxyde de titane se présente sous sa forme anatase.

8. Matériau de construction cimentaire renforcé par fibres selon l'une quelconque des revendications précédentes, dans lequel la concentration du photocatalyseur est d'au moins 4 % en poids par rapport au poids sec total de la composition de la couche supérieure photocatalytique.

9. Matériau de construction cimentaire renforcé par fibres selon l'une quelconque des revendications précédentes, dans lequel la couche supérieure cimentaire active photocatalytique comprend un photocatalyseur **caractérisé par** une surface spécifique dans la plage de 5 à 30 m²/g.

10. Matériau de construction cimentaire renforcé par fibres selon l'une quelconque des revendications précédentes, dans lequel la couche supérieure cimentaire active photocatalytique comprend un agent biocide inorganique.

11. Matériau de construction cimentaire renforcé par fibres selon l'une quelconque des revendications précédentes, dans lequel la couche supérieure cimentaire active photocatalytique comprend un agent biocide dans la plage de 0,1 à 20 % en poids par rapport au poids sec total de la composition de la couche supérieure cimentaire active photocatalytique.

12. Procédé de production d'un matériau de construction cimentaire renforcé par fibres pour la purification de l'air fabriqué selon un procédé comprenant une étape de production sur une chaîne de Hatschek et basé sur une composition de ciment silico-calcaire, et comprenant une couche supérieure cimentaire active photocatalytique hydrofuge, **caractérisé en ce que** ladite couche supérieure comprend en outre un agent biocide selon l'une quelconque des revendications précédentes, comprenant les étapes suivantes :
a) formation d'une première couche de la feuille de base verte,
b) formation d'une couche supérieure par application d'une bouillie cimentaire aqueuse comprenant un ciment silico-calcaire, un photocatalyseur et au moins un produit choisi parmi un agent biocide et un agent hydrofuge, sur ladite première couche de la feuille verte obtenue dans l'étape (a) lorsque cette dernière se déplace sur le transporteur à courroie, et sur une longueur correspondant à la circonférence du tambour de formage,
c) déshydratation de ladite première couche de la feuille de base verte obtenue dans l'étape (a) dotée de la couche supérieure active photocatalytique appliquée sur celle-ci dans l'étape (b),
d) enroulement de la première couche déshydratée de la feuille de base verte obtenue dans l'étape (a) dotée de la couche supérieure active photocatalytique appliquée sur celle-ci dans l'étape (b) sur le tambour de formage,
e) formation de couches supplémentaires de la feuille de base jusqu'à ce que l'épaisseur souhaitée soit obtenue sur le tambour de formage,
f) durcissement du produit obtenu dans l'étape e).

13. Procédé de production d'un matériau de construction cimentaire renforcé par fibres pour la purification de l'air fabriqué selon le procédé de la revendication 12, dans lequel au moins un produit choisi parmi un hydrofuge ou un agent biocide est appliqué après le durcissement de la couche supérieure cimentaire active photocatalytique.

14. Utilisation d'un matériau de construction cimentaire renforcé par fibres selon l'une quelconque des revendications précédentes pour des applications de revêtement mural et de couverture de toit.

15. Utilisation d'un matériau de construction cimentaire renforcé par fibres selon la revendication 13, dans lequel le matériau de construction cimentaire renforcé par fibres est une ardoise.
